# EUROPEAN PATENT APPLICATION

(11) **EP 2 309 055 A1**
(43) Date of publication of application: **13.04.2011**
(21) Application number: 10425317.4
(22) Date of filing: 01.10.2010
(51) Int. Cl.: D06F 95/00, B62B 3/02, B62B 3/00

(54) **Basket with telescopic legs**

(30) Priority: 01.10.2009 IT VI20090240
(71) Applicant: Gualdo, Fabio, 36075 Montecchio Maggiore (VI) (IT); Toniello, Roberto, 36030 Sarcedo (VI) (IT); Franzan, Simone, 36016 Thiene (VI) (IT)
(72) Inventor: Gualdo, Fabio, 36075 Montecchio Maggiore (VI) (IT); Toniello, Roberto, 36030 Sarcedo (VI) (IT); Franzan, Simone, 36016 Thiene (VI) (IT)
(74) Representative: Iannone, Carlo Luigi

(57) **Abstract**

A containers and/or accessories (12, 22) such as, preferably but not exclusively, work tops, baskets, bowls or any other accessory support and moving structure (10), comprising one or more containers and/or accessories (12, 22) to be positioned at prefixed height altitudes with respect to a reference base level (11), wherein the aforesaid container and/or accessory (12, 22) can be housed on a support frame (13) connected with telescopic columns (2, 3, 4) which rest on a base frame (1) and allow to raise and lower the support frame (13), arranged at the top of the columns (2, 3, 4), through a button (T) of a handle (7) placed inside the telescopic columns (2, 3, 4).

## Description

The present invention generically refers to a containers and/or accessories, such as preferably, but not exclusively, working planes, baskets, bowls, drawers or any other accessory to be moved quickly and without special efforts, support and moving structure.

More in particular, the invention concerns a containers and/or accessories support and moving structure which is essentially composed of two telescopic columns arranged on a basement (with or without wheels), which allow to raise and lower a containers-carrier frame placed and/or applied at the top of the columns; the aforesaid frame, as mentioned, can house, preferably but not exclusively, a container (either open, as in the case of a bowl, or closed, as in the case of a chest of drawers), a basket made of flexible material and/or a working plane or any other accessory to be moved.

Currently, functional and inexpensive systems do not exist which allow support and, at the same time comfortably moving a container, such as a bowl or basket, and/or equipped container, such as a chest of drawers, and/or working plane, which must be placed at a fixed height for their use or must be adjusted in height according to the working needs.

Traditional solutions consist indeed of containers such as bowls, baskets and/or laundry baskets in general, which are provided with folding and/or closable retractable legs below the base of the container and are thus used both to transport freshly washing and to contain the washing to be hung out.

In this case, the container is an effective and comfortable support, since it can be lifted off from the ground by opening the retractable legs.

However, such a solution is not fully functional and comfortable, as the user is required to raise the entire container in order to open the legs, before it can be put firmly on a support plane, and this is very difficult mostly in case the weight of the washing contained inside is relevant. Within the above requirements, purpose of the present invention is to overcome the drawbacks complained above and, in particular, to provide a containers and/or accessories, such as preferably, but not exclusively, working planes, baskets, bowls, chests of drawers, support and moving structure which is extremely easy to use and which fins application both at domestic circle (for example, in order to hang out washing, clean windowpanes, etc.) and hobby circle, where it is required to use, load, discharge and/or position a series of objects at a predefined height. Another purpose of the present invention is to create a containers and/or accessories, such as equipped containers, support and moving structure of semi-professional type, which is extremely compact and easily to be moved and/or transported and which can also be used as a raised working plane.

Further purpose of the invention is to provide a containers and/or accessories support and moving structure of professional type, which can be at will adjusted in height, at prefixed measures, on the basis of the working needs.

Last but not least purpose of the invention is to provide a containers and/or accessories support and moving structure which can be produced in a simple way and at reduced costs, compared to the known techniques and in relation to the additional advantages reached.

These and other purposes are achieved by providing a containers and/or accessories, such as preferably, but not exclusively, working planes, baskets, bowls, drawers, etc. support and moving structure according to the claim 1 attached.

Further technical features of detail of the support and moving structure, which is the object of the present invention, are set forth in the related dependent claims.

Advantageously, the structure consists of at least two telescopic columns, arranged on a basement or truck, which allow to raise or lower one or more containers and/or accessories (possibly associated with a support frame), placed at the top of the two columns.

The frame can house a simple container or equipped container (whether open, as in the case of a bowl, or closed, as in the case of a chest of drawers) or basket made of flexible material or working plane and/or any accessory suitable to be supported and moved.

The lifting of the support frame, which can be performed at several prefixed heights, is done by simply pressing a proper button placed at the top of the columns and applying an upward force to the frame.

Indeed, in rest condition the system provides for some block elements among the telescopic columns, which do not allow the lifting of them and, therefore, do not allow the lifting of the support frame, while a pressure exerted on the button releases the mechanical blocks present in the columns, allowing their lifting and therefore of the support frame; the system provides in particular for predefined height positions of the columns, such as a starting position, a final position and possibly some intermediate positions.

The lowering of the container and/or accessory is obtained by acting on the same lifting button and accompanying downwardly the support frame. After having pressed the button, in fact, due to the force of gravity, the support frame drops downwardly and, by releasing the button, following a short press, the frame stops at any intermediate position.

In case of system with more than two positions, in order to totally lower the support frame and, then, the container and/or accessory, when completely closing the system, it is necessary to press again or hold the button pressed, accompanying downwardly the frame and/or container.

The possibility to lift and lower the container and/or accessory and carry it, through the use of wheels applied to the basement, thus allows to easy the moving as well as loading and discharging of the aforesaid container, without having to continually bend down and/or stand up in order to take and/or store the objects contained therein.

Furthermore, it is possible to apply to the structure a strap of shoulder transport in order to easily transport it once the same is in closed position. The support and moving structure in accordance with the invention is therefore easily transportable and very comfortable in the everyday use and it can be used at domestic (for example, for hanging out washing or cleaning windowpanes), hobby (where it is required to place a series of objects at a prefixed height, for their use or load to and/or discharge from the container), semi-professional (when it is required to provide for an equipped container which is extremely compact and easily to be transported in closed position and which can be used as raised working plane in open or closed position) and/or professional circle (when it is required a transport system which can be adjusted in height according to the various working needs).

Finally, the system can change its height without having to fold lifting legs or act on movable parts, except on a release lever.

Further purposes and advantages of the present invention will appear to a greater extent from the following description relating to a preferred embodiment of the containers and/or accessories structure support and moving, object of the invention, provided by illustrative and explanatory, but not limiting, way and with reference to the attached drawing tables, in which:
- figure 1 is a front view of a first embodiment of a containers and/or accessories such as bowls, support and moving structure according to the present invention, in three different positions of fully closed (start position), semi-open (intermediate position) and fully open (final position) structure;
- figure 2 is a front view of a second embodiment of the containers and/or accessories, such as chests of drawers and/or working planes, support and moving structure according to the present invention, always in the three different positions of figure 1;
- figure 3 is a partly cross section view of the containers and/or accessories support and moving structure of figure 1, according to the present invention, in a first position of fully closed structure and with the container placed in the lowest position as possible;
- figure 4 is a partly cross section view of the containers and/or accessories support and moving structure of figure 1, according to the present invention, in an starting position with the lever pressed and ready to be raised and open;
- figure 5 is a partly cross section view of the containers and/or accessories support and moving structure of figure 1, according to the present invention, in an intermediate position of partly raised and open structure;
- figure 6 is a partly cross section view of the containers and/or accessories support and moving structure of figure 1, according to the present invention, in a final position of fully raised and open structure.

It is firstly reminded that, although in the following description it will be made explicit reference to open, such as bowls, or closed containers, such as chests of drawers, the invention can be in any case extended to any support and moving structure of containers and/or accessories in general. With reference to the figures mentioned, a generic structure is shown with 10, which rests on a base or reference plane 11, for the support and moving of bowls 12, housed on a possible upper frame 13 of the structure 10, and/or chests of drawers 22 also housed within the upper frame 13 of the structure 10.

Containers and/or accessories such as bowls 12 and/or chest of drawers 22 may also be integrally fixed to the structure 10, without the interposition of any support frame 13.

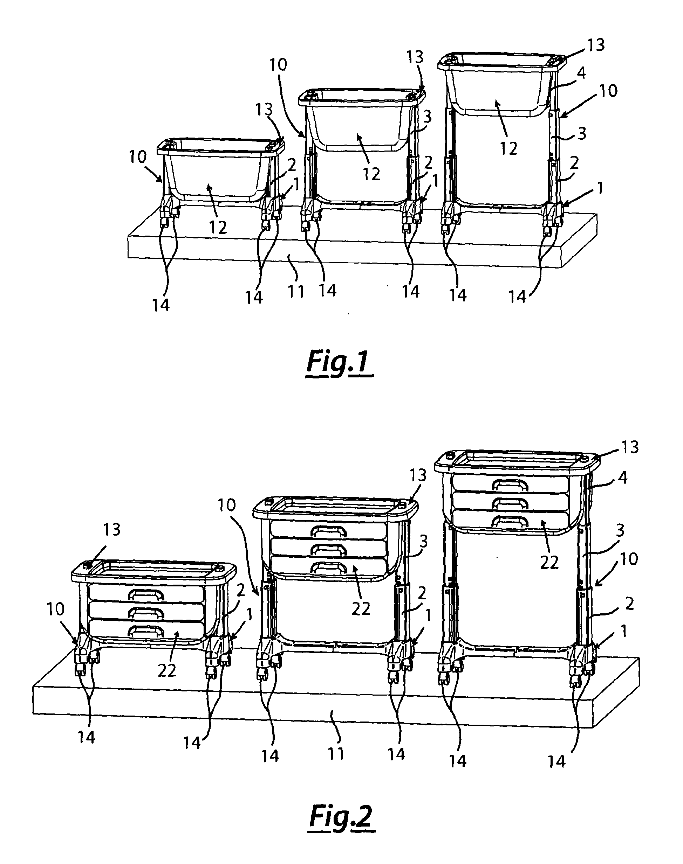

In particular, the appended figure 1 shows the structure with the upper frame 13 and bowl 12 mounted, in a starting position of closed structure, an intermediate position of semi-open structure and a final position of completely open structure, while the enclosed figure 2 shows the structure with the chest of drawers 22 integral with the structure 10, always in the three positions of closed, semi-open and fully open structure.

It is clear, then, that the possibility of raising and lowering the container and/or accessory, such as the bowl 12 and/or chest of drawers 22, and carry it through the wheels 14, with which the structure 10 according to the invention may optionally be equipped, allows advantageously to ease loading and discharging of the aforesaid container and/or accessory, without having to continually bend down and/or stand up in order to take the objects contained therein.

The advantage is evident both in domestic or hobby circle (for example, for hanging out washed clothes, cleaning the windowpanes and generically positioning of objects at a given height and using of them), and in semi-professional (for example, for providing of compact and easily transportable equipped containers, which can be used as raised working planes as well) and/or professional circle (for example, for providing of a height adjustable transport system according to the working needs).

It is also possible to apply to the structure 10, a strap of shoulder strap, in order to transport more easily the structure 10, once it has been grouped in the starting closed position.

The operation of the containers and/or accessories support and moving structure 10, which is the object of the present invention, is essentially as follows.

The structure 10 substantially consists of at least two telescopic columns, arranged on a basement, which allow to raise and lower the containers and/or accessories 12, 22 or frame 13, placed at the top of the columns, where the containers and/or accessories 12, 22 are hosed.

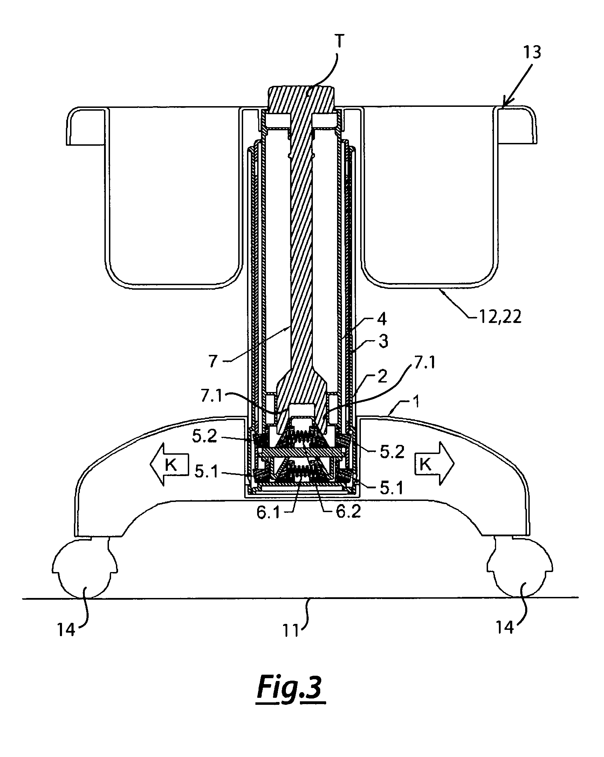

In particular, with reference to the attached figures 3-6, the structure 10, according to the invention, consists of a series of columns (typically three in number and indicated with 2, 3 and 4 in the attached figures), placed one inside the other and of which the outermost one (indicated with 2) is integrally fixed to the lower frame 1, the innermost one (indicated with 4) is fixed to the upper frame 13 or accessories 12, 22, while the columns 3 and 4 flow within the column 2.

In the figure 3 attached the structure is shown in a completely closed starting position, with the columns 2, 3 and 4 grouped and stacked together and the frame 13 placed in the lowest position as possible.

Inside the lower frame 1 some pins 5.1, 5.2 are also present, which, in the position of figure 3, are free and that, due to the effect of the elastic thrust of the spring 6.1, 6.2, are forced outwardly (in a direction substantially corresponding to the arrows K of figure 3) and rest on the inner surfaces of the columns 4 and 2, respectively.

In this position, the pins 5.2 perform the block of the structure and the handle 7 is free and pushed upwards thanks to the geometric profile of the inclined planes in the pins 5.1, 5.2 themselves.

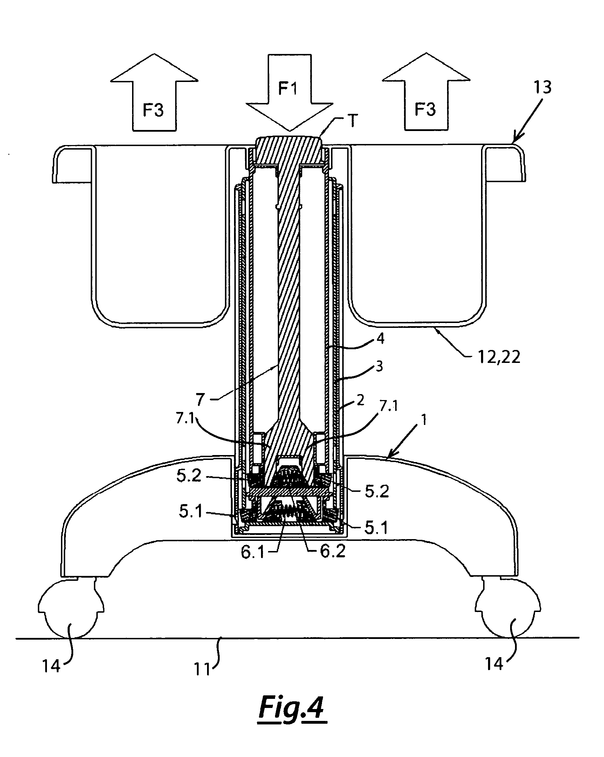

Figure 4 enclosed shows the support and moving structure, according to the invention, always in the completely closed starting position, with the frame 13 in the lowest position as possible, but with the button T of the handle 7 pressed, through a force directed in accordance with the arrow F1.

Such an action causes the closing of the pins 5.2 and the resulting compression of the spring 6.2, so that the possible frame 13, together with the container and/or accessory 12 or 22, can be raised along the direction defined by the arrows F3.

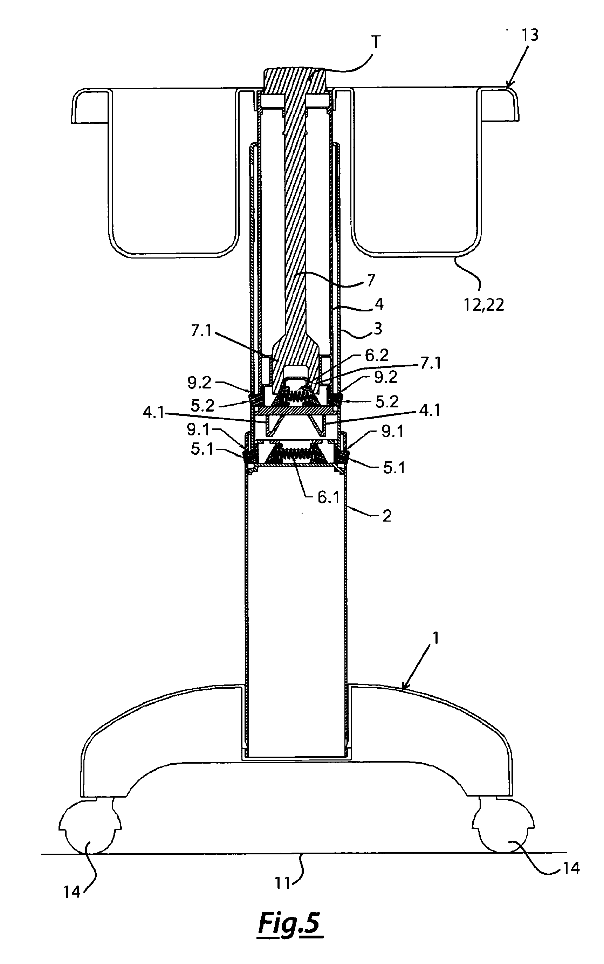

Once the frame 13 is raised, by releasing the button T of the handle 7, it is possible to raise the container and/or accessory 12, 22 up to an intermediate position (the position shown in the attached figure 5); in this position, the button T is not pressed, while the pins 5.1, 5.2 fit, due to the action of the respective elastic springs 6.1, 6.2, into the related openings or holes 9.1, 9.2, in order to block the structure at a predefine height and not allow any movement of ascent or descent of the frame 13 on the columns 2, 3, 4.

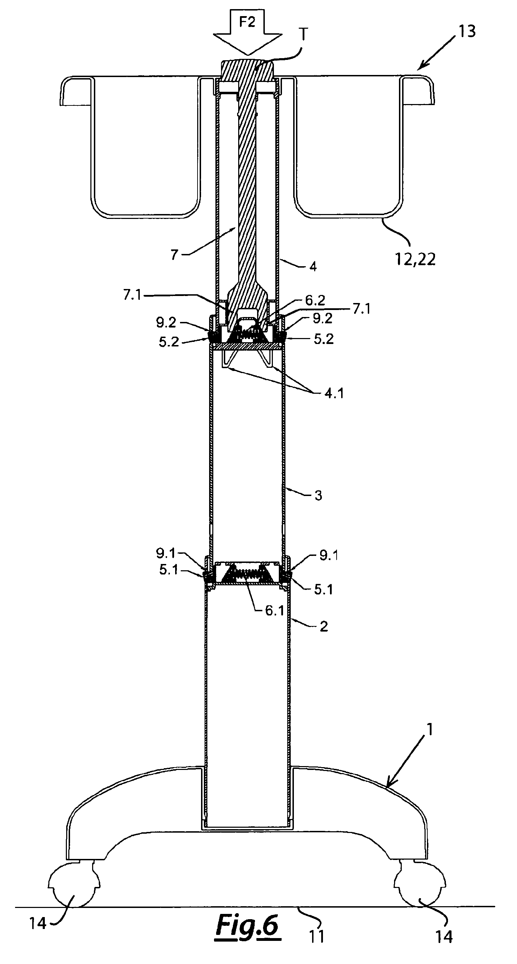

A further press of the button T of the handle 7, according to the direction of the arrow F2 shown in the appended figure 6, as well as the application of an upward force allows the structure to reach a fully open final position (shown in the attached figure 6), since the frame 13 is pushed upwardly by the force applied.

Indeed, in this position, the frame 13 and container and/or accessory 12, 22 are locked in position at the maximum height of the structure, because the pins 5.1 fit into their own seats (openings or holes 9.1) and do not thus allow to the column 3 to go down, while the pins 5.2 fit into the openings or holes 9.2, thus not allowing the column 4 to go down.

In order to regroup the structure at its lowest height, it is necessary to act again on the button T of the handle 7 according to the direction of the arrow F2 in figure 6; at the application of such a pressure, indeed, the tips 7.1 of the handle 7 act on the pins 5.2, so as to retract them, overcoming the elastic force of the spring 6.2 and thus release the openings or holes 9.2 made in the column 3.

In this way, the column 4 can go down until the tips 4.1 of the column 4 interact with the pins 5.1, which by overcoming the elastic force of the spring 6.1, retract themselves and release the openings or holes 9.1. Consequently, the columns 3 and 4 can regroup inside the column 2 and the structure is once again locked in the completely closed starting position.

On the basis of what said above, it is understood, therefore, as the containers and/or accessories support and moving structure, which is the object of the invention, reaches the purposes and achieves the advantages yet previously mentioned.

Moreover, in execution phase, changes mat be made to the outer frame of the invention consisting, for example, in a different number of support columns to be fixed to the upper 13 and lower 1 frames, as well ass other constructive and/or aesthetic types of the invention may exist.

In addition, other embodiments of the invention may subsist, according to which the containers and/or accessories can consist, beyond bowls and drawers, of additional equipped containers and/or working planes and/or containment compartments in general.

It is, finally, clear that several other variations may be made to the containers and/or accessories support and moving structure in question, without departing from the principle of novelty intrinsic in the inventive idea expressed here, as it is clear that, in the practical implementation of the invention, materials, shapes and sizes of the illustrated details can be changed, as needed, and replaced with others technically equivalent.

For example, the structure could be made in any material such as, for instance, plastic, aluminium, wood, iron, etc.

Moreover, where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Containers and/or accessories (12, 22) support and moving structure (10), comprising at least one container and/or accessory (12, 22) to be positioned at prefixed height altitudes with respect to a reference base level (11), **characterized in that** said container and/or accessory (12, 22) is connected with at least two telescopic columns (2, 3, 4) which are based on at least one base frame (1) and allow to raise and lower said container and/or accessory (12, 22), through at least one button (T) of at least one handle (7) placed inside said telescopic columns (2, 3, 4).

2. Support and moving structure (10) as claim 1, **characterized in that** said containers and/or accessories (12, 22) include open and/or closed containers, such as basins and/or drawers, and equipped containers, baskets, work tops, etc.

3. Support and moving structure (10) as claim 1, **characterized in that** said container and/or accessory (12, 22) is housed on at least one support frame (13) connected with said telescopic columns (2, 3, 4).

4. Support and moving structure (10) as claim 1, **characterized in that** said container and/or accessory (12, 22) is movable between two predefined height positions, so that said structure (10) constitutes a transport system adjustable in height.

5. Support and moving structure (10) as claim 1, **characterized in that** said container and/or accessory (12, 22) is movable between a starting position, wherein said structure (10) is closed and said container (12, 22) is placed at a first distance from said reference base level (11), an intermediate position, wherein said structure (10) is semi-open and said container (12, 22) is placed at a second distance, greater than said first distance, from said reference base level (11), and a final position, wherein said structure (10) is fully open and said container (12, 22) is placed at a third distance, greater than said first and second distance, from said reference base level (11).

6. Support and moving structure (10) as claim 1, **characterized in that** one or more wheels (14) for an easy transportation of the structure (10) and an easy loading/unloading of objects are connected with said base frame (1).

7. Support and moving structure (10) as claim 1, **characterized in that** it includes at least a strap for shoulder carriage.

8. Support and moving structure (10) as claim 1, **characterized in that** at least a first telescopic column (2) is integrally fixed to said base frame (1) and at least one second telescopic column (4) is fixed to said container and/or accessory (12, 22).

9. Support and moving structure (10) as claim 1, **characterized in that** one or more pins (5.1, 5.2), which, in a first position of the structure (10), are free and, through elastic means (6.1, 6.2), are forced toward the outside (K), so as to they are leant on the inner surface of at least one of said telescopic columns (2, 3, 4), are arranged within said base frame (1).

10. Support and moving structure (10) as claim 8, **characterized in that** an operation of the button (T) of said handle (7) causes the closure of said pins (5.2) and the compression of said elastic means (6.2), so that said container and/or accessory (12, 22) can be lifted along a vertical direction (F3).

11. Support and moving structure (10) as claim 8, **characterized in that** said pins (5.1, 5.2), in a second position of the structure (10), are inserted, owing to the action of said elastic means (6.1, 6.2), into respective openings (9.1, 9.2), in order to stop said container and/or accessory (12, 22) at a predefined height from said reference base level (11).
